# EUROPEAN PATENT APPLICATION

(11) **EP 2 988 217 A1**
(43) Date of publication of application: **24.02.2016**
(21) Application number: 14181829.4
(22) Date of filing: 21.08.2014
(51) Int. Cl.: G06F 9/54

(54) **Method and system with client side adaptive universal service interface support**

(71) Applicant: licobo GmbH, 68163 Mannheim (DE)
(72) Inventor: Amann, David Christian, 68163 Mannheim (DE)
(74) Representative: Bittner, Peter

(57) **Abstract**

A local computer (100), computer implemented method and computer program product for using an arbitrary remote service (11, 21, n1) via a respective remote interface (RI) is disclosed. The local computer has an interface component (180) configured to access an RI program code storage. It further a runtime environment (160) configured to execute an application (161) using one or more processors of the local computer and an application memory portion of a memory of the local computer. The application includes a method call (162) which is to be associated with a particular remote service (11). The method call (162) uses RI parameters including at least a remote service identifier specifying the particular remote service, an associated object type, and an associated method identifier. An RI generator component (170) of the local computer is configured to check if a particular RI runtime environment (121, 1n1) associated with the particular remote service (11) is available on the local computer (100). If the particular RI runtime environment (111) is not available, a particular RI program code (pc11) associated with the RI parameters is loaded from the RI program code storage and the particular RI runtime environment (111) is generated. The particular RI runtime environment (111, 121, 1n1) can execute the particular RI program code (pc11, pc21, pcn1) for establishing a communication between the application (161) and the particular remote service (11, 21, n1).

## Description

### Technical Field

The present invention generally relates to electronic data processing, and more particularly, relates to methods, computer program products and systems for network communication.

### Background

Computing devices have been coupled to one another and to other electronic devices to form both wired and wireless computer networks over which the computing devices and other electronic devices can transfer electronic data. As a result, many tasks performed at a computing system (e.g., accessing electronic mail, controlling home electronics, Web browsing, printing documents, etc.) include the exchange of electronic messages between a number of computing devices and/or other electronic devices via wired and/or wireless computer networks. In current networks a simple network-enabled computing system may communicate with any one of millions of other computing systems spread throughout the globe over a conglomeration of networks often referred to as the "Internet". Such computing systems may include computers, such as desktop, laptop, or tablet personal computers, Personal Digital Assistants ("PDAs"), telephones, or any other computer or device capable of communicating over a network.

Applications which are executed on such a computer (e.g., a client or local computer) may benefit from using services which are provided by remote devices (e.g., server computers) which are accessible over a network. However, different programming models may be used for the design of an application on the client and for the remote service provided by a remote service device also referred to as remote device herein after. For example, different configuration options, such as, for example, security options, reliable messaging options, message logging options, connection throttling options, etc. may be used by the different programming models. This typically leads to a situation where an application running on a client computer cannot simply connect to a desired service on a remote device.

The European patent application EP1688836 discloses a computer system for utilizing abstract descriptions to generate, exchange, and configure service and client runtimes. The computer system generates an abstract service description that describes a network-based service. The computer system accesses a service type (e.g., including compiled code) and corresponding service configuration for implementing a service in accordance with a specified programming model. The computer system parses the service type and corresponding service configuration to identify description information that describes the service based on the specified programming model. The computer system creates a service description tree (metadata) for the service based on the identified description information. The format of the service description tree is independent of any programming model and is consumable such that one or more other transform modules can consume the service description tree to create additional representations of the service in other formats. In other words, metadata about the structure of the service and the service endpoints is extracted and then used to generate coding on the basis of a service description which is then used on both sides (the client running the application and the server providing the to-be-consumed service) to convert exchanged data into the respective party's data format. That is, both parties need to be modified or adjusted in accordance with the derived metadata to allow communication. Further, the functionality of the generated interface is limited to what is derived from the service description as metadata.

### Summary

Therefore, there is a need to overcome the above technical problems in prior art solutions. Embodiments of the invention as disclosed in the independent claims overcome those problems and allow a more flexible generation of remote device interfaces, or simply remote interfaces as used hereinafter, to access and use arbitrary remote services on arbitrary remote devices. Thereby, the disclosed computer implemented method, respective computer program product and local (e.g., client) computer configured to run the computer program for executing the method, allow the adaption of a remote interface for all its functionalities with a smaller number of configuration steps whereby only the client computer is affected by the adaptation. That is, the remote device providing remote service(s) is not modified by the disclosed method and system. Further, the program code of the application on the client computer remains unaffected by the generation or adaptation of remote interfaces on the local computer according to embodiments of the invention. The terms local computer and client computer are used as synonyms throughout this document. Typically, the term local/client computer is used for a computer which is operated by an application user whereas a remote device/computer (e.g., a server) is often not operated directly by the application user. In the embodiments described herein, the local computer can be a client computer in the sense that the local computer consumes a service from the remove computer; and the remote computer is a server computer in the sense that the remote computer provides the services.

The above technical advantages of the various embodiments of the invention are achieved by the features as claimed in the independent claims.

In one embodiment, a client computer is configured to use an arbitrary remote service via a respective remote interface. The term "remote interface" is also referred to as "RI" hereinafter. The components of the client computer are communicatively coupled as disclosed in the following description. For example, the components may communicate over an internal communication bus of the client computer.

The client computer includes an interface component which is configured to access an RI program code storage. The RI program code storage has a memory to store program code for implementing remote interfaces for a plurality of remote services provided by one or more remote devices. The program code may be stored in a database or in a file system as appropriate. For example, a remote device can be a remote server providing software services, such as for example, web services based on standards like Universal Description, Discovery and Integration (UDDI), Web Services Description Language (WSDL), Simple Object Access Protocol (SOAP), or any other service (e.g., a print service provided by a print device through a Universal Serial Bus (USB) interface) consumable by remote applications running on the client computer. In other words, a remote service is a software application which is provided by the remote device with a respective remote interface over a communication network for direct machine-to-machine interaction.

The client computer further has an application runtime environment configured to execute an application. Thereby, the application can be a local application on the local computer or a networked application (e.g., a web application) which is hosted by a further computer and accessed or used by the local computer. A runtime environment, as used hereinafter, is representing the physical hardware environment on which the runtime environment resides and implements a standard set of software services that components of the application require at runtime. Runtime environments can be nested. For example, a database runtime environment can be nested in an operating system runtime environment. Components of the appropriate type are then deployed to respective runtime environment nodes. An example for a runtime environment within the meaning of this disclosure is a Java runtime environment (JRE or Java Virtual Machine) which is configured to execute Java applications. For example, a Java runtime environment can be nested in an operating system runtime environment. Another example is a JavaScript runtime environment which can be nested in a Java runtime environment which again can be nested in an operating system runtime environment.

The runtime environment uses one or more processors of the client computer and an application memory portion of a memory of the client computer to run the application. The application includes a method call which is to be associated with a particular remote service. That is, the method call is not directly calling the remote service but allows the computer client to dynamically implement a respective RI which can then be used by the application to establish a communication with the remote service. The method call uses a set of RI parameters including at least a remote service identifier specifying the particular remote service, an associated object type, and an associated method identifier.

The client computer further has an RI generator component configured to generate an RI in response to the method call in accordance with respective RI parameters. When the RI generator is activated in response to the method call from the application it checks if a particular RI runtime environment associated with the remote service specified by the method call is already available on the client computer. For example, the RI generator component can be activated by a corresponding application interface method which is called when processing the method call. If the particular RI runtime environment is not yet available the RI generator component is configured to load a corresponding (i.e., associated with the RI parameters) particular RI program code from the RI program code storage. The RI program code is a partial or complete implementation of the service interface required by the remote service. The RI program code storage can be part of the client computer or it can be implemented on a remote storage device which is accessible by the client computer through the interface component, for example, via a local area network or a wide area network (e,g., the Internet). The RI generator then generates the particular RI runtime environment with the retrieved (loaded) particular RI program code. Similar to the runtime environment for the application the RI runtime environment implements a set of software services which are needed to execute the RI program code at execution time.

Each RI runtime environment can have its own specific memory portion within the RI memory portion. Each executing RI program code may be restricted to only access the specific memory portion of the RI runtime environment in which the RI runtime environment is executed. As a consequence, the RI runtime environment can be isolated from the application runtime environment in that it is able to execute program code which is not native program code as used for the application program but which includes non-native program statements (instructions). Sometimes, a runtime environment for executing software in a dedicated environment which is isolated from other system resources is referred to as "sandbox". A sandbox can be compared to a container in which software can be executed without affecting other resources of the system. For example, "sandbox" is often used in the context of virtual machines (e.g., Java Virtual Machine) providing specific runtime environments. The application code does not need to be modified when generating the remote service interface as the application code is independent from the RI program code and not affected by the generation of the RI in the respective particular RI runtime environment in response to the method call. Such isolation further allows preventing any injection of malicious program code in the loaded RI program code into the application. Isolation can be achieved, for example, by using an interpreter in the RI runtime environment which is configured to allow the RI program code only particular memory accesses and program calls. Alternatively, isolation can be achieved by a specific layer (e.g., in the form of library functions) between the RI runtime environment and all other components of the local computer.

The particular RI runtime environment is configured to execute the particular RI program code for establishing a communication between the application and the remote service. Thereby, the generated RI supports some or all functions and methods of the remote service interface at the remote device. There is no need to adapt the remote device in any respect, neither in terms of hardware, nor in terms of software. The RI runtime environment on the client device is therefore capable to convert data between remote data formats used by the remote service and respective application data formats used by the application without any further adaptation.

There is no need for service metadata or any other service description apart from the RI program code stored in the RI program code storage. The RI program code, when executed, does not simply convert data formats but can also convert interface protocols. For example, if the application only provides a TCP (Transmission Control Protocol) layer interface but the remote service requires a HTTP (Hypertext Transfer Protocol) client interface, then the RI program code can include an HTTP client library and use it as fallback system. In other words, the program code can include a protocol layer library to convert protocol layers.

To summarize, an RI includes at least the interface component to retrieve RI program code and the RI generator component which is activated in response to processing the method call (e.g., through the application interface method). Optionally the RI program code can also be included as part of the RI. In one embodiment, the RI components may be nested in the application. In this embodiment, the RI can use an RI memory portion of the memory of the application for caching and executing the respective RI program code.

In one embodiment, the RI components may be nested in the operating system. In this embodiment, the RI can use an RI memory portion of the memory of the operating system for caching and executing the respective RI program code

It is to be noted that only one method call implemented in the application can then automatically lead to the generation of the respective RI runtime environment for a particular service provider on a respective remote device.

Whereas prior art solutions only provide data conversion based on pre-defined metadata structures describing the remote service, the disclosed embodiments according to the invention allow to load the complete RI on demand whenever a respective remote service is to be invoked by the application.

As a consequence, in one embodiment, the proposed system can easily update the particular RI runtime environment if the RI generator recognizes that the corresponding RI program code is no longer up-to-date. For example, a more recent version of the RI program code may be available in the RI program code storage. In this case, the RI generator can load the more recent version from the RI program storage based on the associated RI parameters and update the particular RI program code in the particular RI runtime environment with the more recent version. As a consequence, the client computer executing the application becomes robust against changes in the remote service interface. Only the RI program code storage is updated accordingly, for example, by the remote device providing the remote service.

In one embodiment, the client computer can detect when the execution of the particular RI program code results in an execution error. If this occurs, the RI generator can check if the corresponding RI program code is up-to-date and if the error occurred because of the use of an outdated version. If the corresponding RI program code is not up-to-date the RI generator can load from the RI program code storage the particular RI program code associated with the RI parameters and update the particular RI runtime environment accordingly.

In one embodiment, computer program instructions are loaded into a memory of the local computer and are executed by at least one processor of the computer system causing the computer system to execute the steps of the respective computer implemented method for performing the above described functions.

In a further embodiment, the computer program instructions may be stored on a computer readable medium forming a computer program product.

Further aspects of the invention will be realized and attained by means of the elements and combinations particularly depicted in the appended claims. It is to be understood that both the foregoing general description and the following detailed description are exemplary and explanatory only, and are not restrictive of the invention as described.

### Brief Description of the Drawings

FIG. 1 is a system diagram illustrating a client computer according to one embodiment of the invention interfacing with remote services;
FIG. 2 is a system diagram of an alternative embodiment of the client computer according to a further embodiment of the invention;
FIG. 3 is a flow chart of a computer implemented method for dynamic generation of a remote interface;
FIG. 4A shows two alternative embodiments for nesting an RI runtime environment;
FIG. 4B shows an example of a packaged RI according to an embodiment of the invention;
FIG. 5 is an example class diagram used in one embodiment of the invention; and
FIG. 6 is a diagram showing a generic computer device and a generic computer, which may be used in embodiments of the invention as remote or as local computer devices.

### Detailed Description

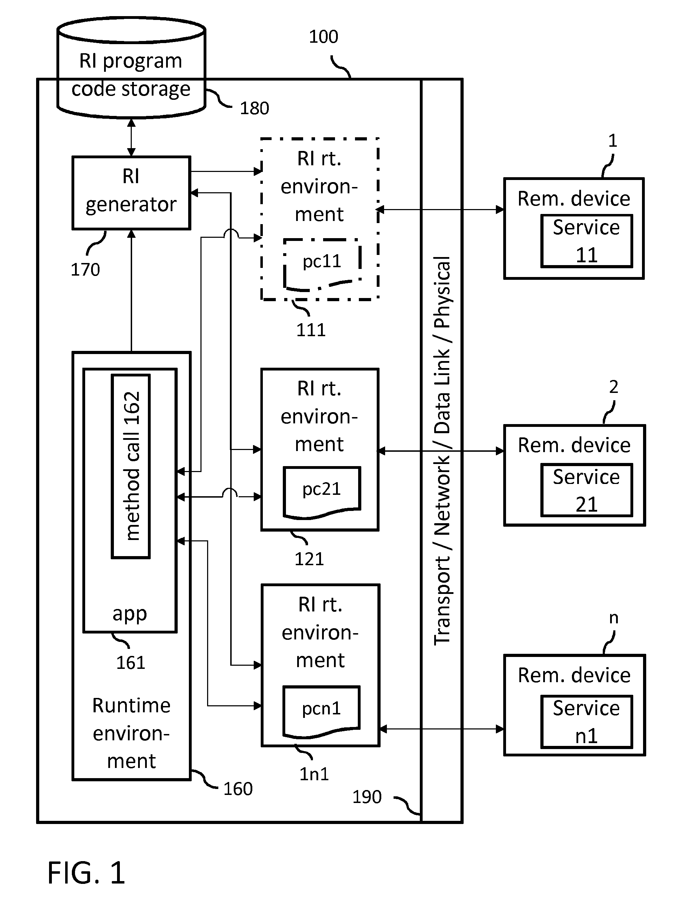

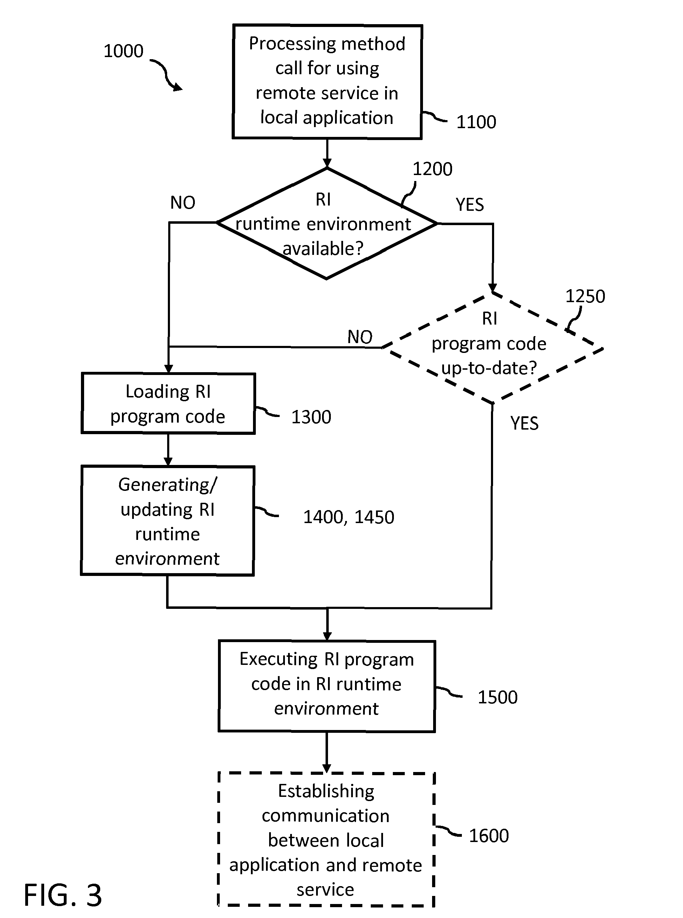

Embodiments of the invention will now be described in more detail. FIG. 1 is a system diagram illustrating a client computer 100 with a remote interface according to one embodiment of the invention interfacing with remote services 11, 21, n1. The various functions of the client computer 100 and its remote interface are described in view of the flow chart of FIG. 3 which illustrates a computer implemented method 1000 for dynamic generation of a remote interface (RI) for using an arbitrary remote service 11, 21, n1 by the client computer 100.

The client computer 100 has a runtime environment 160 configured to execute an application 161 using one or more processors of the client computer and an application memory portion of a memory of the client computer. For example, the runtime environment 160 can be a native application runtime environment provided by the operating system of the local computer or a Java or JavaScript runtime environment or any other runtime environment suitable to execute an application 161 coded in a respective programming language. The application 161 (i.e., the application program) includes a method call 162 which is to be associated with a particular remote service 11. In other words, the remote service method call instruction(s) in the application program code is/are intended to invoke the remote service 11 on the remote device 1. This is achieved by associating the method call 162 with a RI generator component 170 to enable a communication between the application and the particular remote service. Thereby, the particular remote service can be an arbitrary remote service out or a plurality of remote services. The method call 162 uses a set of RI parameters which include at least a remote service identifier specifying the particular remote service 11, an associated object type, and an associated method identifier. The combination of remote service identifier and associated object type will also be referred to as node identifier hereinafter.

The following code examples show a read and a create method call in the application program code as implemented in JavaScript and in C++.

Code examples 1 and 2 show a read method call to all FileStorages of a user, that is, to the file storages for which the user of the client computer has access rights.

### code example 1:

```
      // method call in JavaScript
      RI.read(new RI.FileStorage(sServiceTag), oUserIdentity,
      evaluatingResults);
```

### code example 2:

```
      // method call in C++
      RI.read(new RI.FileStorage(sServiceTag), oUserIdentity,
      &evaluatingResults);
```

Both method calls specify in their respective programming language the remote service identifier sServiceTag and the associated object type FileStorage. That is, the created node identifier RI.FileStorage(sServiceTag) in the method call (RI.read(...)) is associated with the service identifier sServiceTag and the object type FileStorage. The parameter oUserIdentity may be used to identify the current user with his/her specific authentication properties. The specific authentication properties can depend on the associated remote service. The parameter evaluatingResults is a function which can be executed when the status (e.g., upload progress, success termination, errors, etc.) of the current service request is changed.

A more complex example is a create method call to create a new folder/directory to be stored in the file storage. Code examples 3 and 4 show respective program code portions again in JavaScript and in C++.

### code example 3:

var folder = new RI.File(sServiceTag);
folder.isDir = true;
folder.sFilename = 'folder_name';
folder.create(oUserIdentity, evaluatingResults);

### code example 4:

RIFile folder = new RI.File(sServiceTag);
folder->setDir(true);
folder->setFilename("folder_name");
folder->create(oUserIdentity, &evaluatingResults);

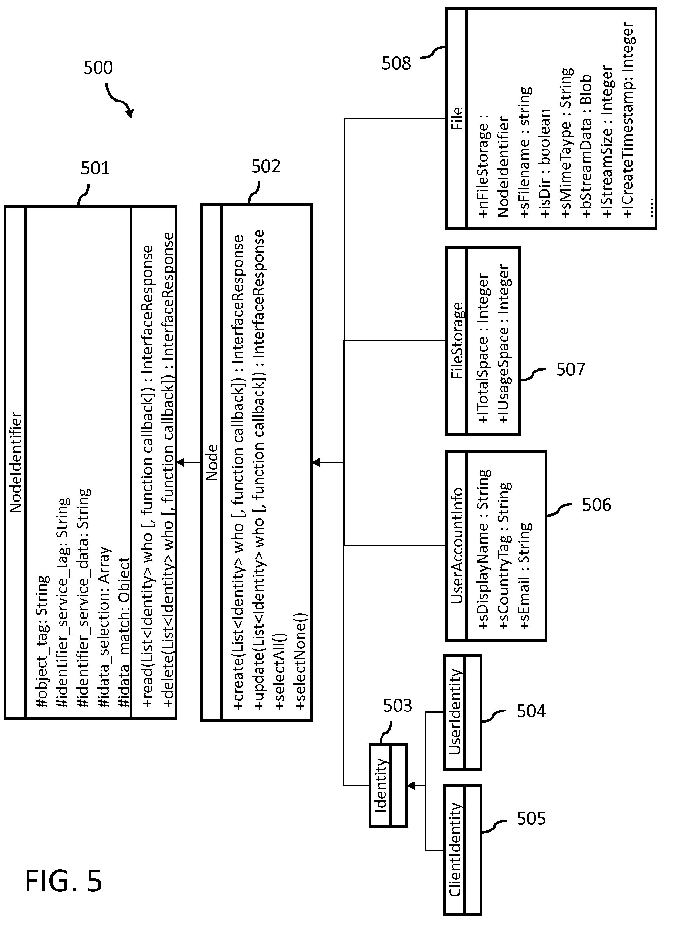

Referring briefly to FIG. 5 illustrating a class diagram underlying the above examples, the variable "folder" in code examples 3 and 4 is a File object 508 instance with the node identifier 501 data: object_tag = FILE; identifier_service_tag = sServiceTag.

The local computer 100 is illustrated with RI runtime environment 111 associated with remote service 11, RI environment 121 associated with remote service 21, and RI environment 1n1 associated with remote service n1. When the application 161 processes the method call 162 to invoke a respective remote service, the associated RI runtime environment can already be available on the local computer 100, or the associated RI runtime environment needs to be generated on the computer 100. The processed method call 162 includes the node identifier which can then be used by the RI generator component 170 to check 1200 if a particular RI runtime environment associated with the remote service 11 is available on the client computer 100. The RI runtime environment can execute a corresponding program code implementing the remote interface to connect the application 161 to the remote service specified in the method call 162.

The check 1200 may also be performed by any other suitable component of the client computer. For performing the check 1200, the RI generator 170 can access an assignment data structure which includes information about RI runtime environments 121, 1n1 already existing on the client computer in relation to the remote service identifier and object type identifier in the node identifiers of respective method calls wherein the RI runtime environment itself is mapped to a respective remote device. For example, the assignment data structure can be stored as data structure of the RI generator component or anywhere else on the client computer 100 itself or remotely accessible by the client computer. For example, the assignment data structure can be implemented as one or more tables defining the assignments between the remote service identifiers and respective RI runtime environments and between the object type, the method and the RI program code in an RI runtime environment. The following table illustrates an assignment data structure in the context of the example in FIG. 1

### Example for assignment data structure (table):

| **sServiceTag (service identifier)** | **pointer to RI runtime environment** |
|---|---|
| Service 21 | RI runtime environment 121 |
| Service n1 | RI runtime environment 1n1 |
| ... | ... |

Other assignment data structures (e.g., pointer structures, ontology structures, etc.) may be used instead. When the RI generator 170 checks the availability of a particular RI runtime environment in view of the processed method call 162 it can first check if there is an existing RI runtime environment available for the called service identifier (e.g., sServiceTag). In the example of Fig. 1 the already available RI runtime environments 121, 1n1 are illustrated by solid frames. The RI runtime environment 121 can execute the RI program code pc21 which implements the remote interface to connect the application 161 to the remote service 21 on the remote device 2. The RI runtime environment 1 n1 can execute 1500 the RI program code pcn1 which implements the remote interface to establish the communication between the application 161 and the remote service n1 on the remote device n. If the check 1200 reveals that the appropriate RI execution environment is already available for the service identifier the RI generator can check if also the RI program code corresponding to the associated object type is available. If so, executing the RI program code with the respective RI runtime environment will finally establish 1600 the communication between the application and the remote service.

In the example of FIG. 1, the method call 162 includes a node identifier which is to be used to connect the application to the remote service 11 on the remote device 1. It is assumed that the particular RI runtime environment 111, which would be suitable to connect the application to the remote service 11, is not yet available (illustrated by dashed frames) on the client computer. The RI generator 170 can recognize this when the check 1200 does not identify corresponding data entries (node identifiers) in the assignment data structure. In this case, the RI generator 170 can load 1300 a corresponding RI program code pc11 from a RI program code storage through a respective interface 180. The identification of the corresponding RI program code is based on the node identifier in the method call 162. Any suitable storage means and/or data structure (e.g., database, file system, etc.) may be used to implement the RI program code storage on the client computer or on a remote storage device.

The RI generator can then generate 1400 the corresponding RI runtime environment 111 in response to the node identifier of the method call. The RI runtime environment 111 is generated by providing the memory and an interpreter for executing the RI program code pc11 on the client computer 100. For example, for executing the RI program code the interpreter can request memory to be allocated to the RI runtime environment based on RI specific interpreter settings. Such settings can be configured to ensure that the executing RI program code can only access such variables in memory which are specifically designated to the executing RI program code. Generating a RI runtime environment for the RI program code allows executing 1500 RI program code which does include code instructions in a different programming language (non-native code) than the programming language of the application program code (native code).

The method call statements to invoke the remote services can be statically included in the application program code (e.g., at design time of the application design). No further change of the application is necessary to implement the corresponding remote interfaces on demand by simply downloading the respective RI program codes from the RI program code storage and executing the RI program code in the respective RI runtime environment. The generated remote interfaces allow not only to implement any data conversion method necessary to establish a communication between the application and the remote service but further allow implementing a partial or complete communication layer (e.g. HTTP, IMAP, SOAP, ...) if required by the remote service.

For interface conversion the RI program code can include instructions to check the availability of a respective external interface (e.g., external HTTP client interface). If such an external interface is available, for example, because it is provided by the application or the operating system of the client, the remote interface can use the external interface for interface conversion. Otherwise, the program code can include instructions to implement parts of the interface required by the remote service. In other words, the RI program code can include a respective interface library which can be executed by the respective RI runtime environment to generate the required interface layer.

The following example illustrates the capability to convert data formats between application specific data formats and remote service specific data formats. The example relates to a JavaScript RI program code portion for time/date conversion.

It is assumed that time/date information is provided as a string according to the ISO-8601format (published in RFC 3339, July 2002) which is to be converted into a 64-Bit Integer (Biglnt/Long) format (Milli seconds since 1.1.1970 00:00:00 UTC). Code for data format conversion is available in libraries that are well known to the person of skill in the art so that for simplicity only the input and the output of the program code are given. The following code example 5 illustrates such a data format conversion.

### Code example 5:

```
      // example for inputDateString = "2014-08-01T09:50Z"
      var lOutputDate = Date.parse(inputDateString);
      // Date is a Standard lib. Class and parse a method of the Date Class
      to parse Date/Time strings
      // lOutputDate = 1406886600000
```

There is no modification at all at the remote devices and remote services. Only the client side is modified by generating the appropriate remote interfaces based on the RI program code. The RI program code may implement an entire, complete remote service interface or it may implement only partial aspects of the interface for the remote service. A partial implementation may save memory on the client computer because complete remote service interfaces can become quite large.

In one embodiment the memory of the RI runtime environment 111 can be isolated from the memory of the application runtime environment. This may improve the security of the client computer by preventing, for example, RI program code to be injected into the application code when, for example, the RI program code includes malicious code.

Turning briefly to FIG. 3, the establishing communication step 1600 is illustrated with a dashed frame because the client side method 1000 is terminated with the execution 1500 of the RI program code which enables the client computer to establish the communication. Therefore, establishing 1600 the communication itself is to be seen as an optional step in the computer-implemented method 1000.

A further optional step of the computer implemented method 1000 is checking 1250 if the particular RI program code is up-to-date in case the particular RI runtime environment 111 is already available on the client computer. The up-to-date check 1250 may be performed subsequent to the availability check 1200. If the RI program code is up-to-date the particular RI program code can be executed 1500 by the particular (available) RI runtime environment. Otherwise, the RI generator can update 1450 the corresponding particular RI runtime environment by loading 1300 the up-to-date RI program code for the already available RI runtime environment.

A further optional step (not illustrated) of the computer implemented method 1000 is checking if the particular RI program code is up-to-date if the executing step 1500 results in an error of the remote service or the remote device (e.g., a server). If the execution error was caused by an obsolete version of the RI program code (i.e., the current RI program code version is not up-to-date), loading 1300 from the RI program code storage the current version of the RI program code associated with the RI parameters, and updating 1450 the particular RI runtime environment 111.

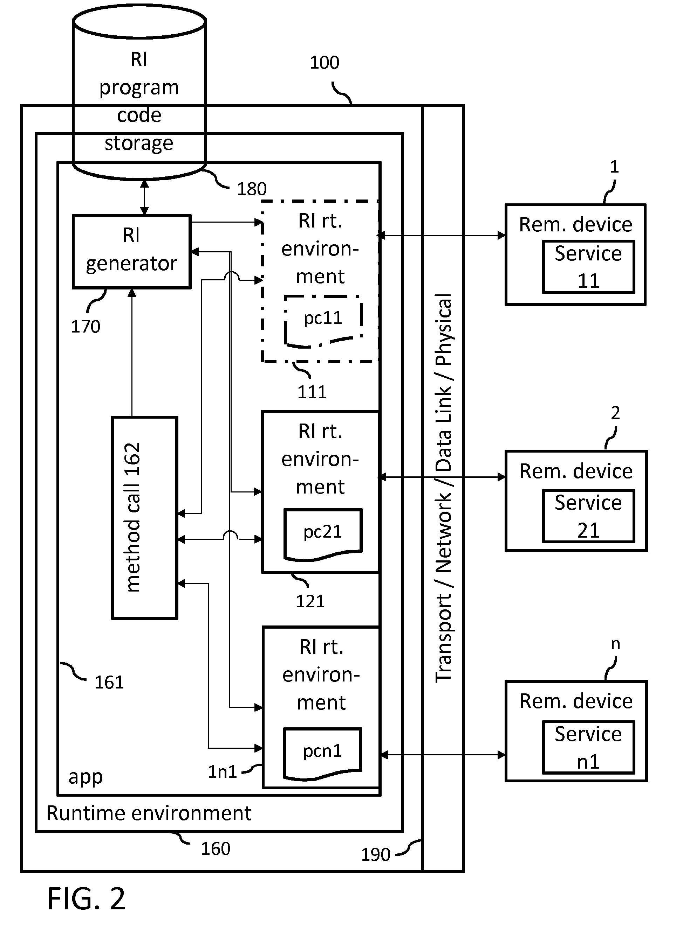

FIG. 2 is a system diagram of an alternative embodiment of the client computer 100 according to a further embodiment of the invention. In the example embodiment of FIG. 2, the RI with the components RI generator 170 and interface 180 to the RI program code storage is integrated into the application 161. This integration corresponds to a static integration at design time of the application. The RI runtime environments 111, 121, 1 n1 are still generated dynamically at runtime of the application based on the respective RI program codes pc11, pc21, pcn1. In the example embodiment, the RI runtime environments are generated as nested runtime environments inside the application runtime environment 160. The embodiment of FIG. 2 can be used to deploy the whole program framework which is needed for the dynamic implementation of remote interfaces (including the RI program codes and the respective method calls as disclosed in the context of FIGs. 1 and 3) together with the application 161 without the need for any further installation of non-application software components.

The following example embodiments illustrate the capability of an RI example to communicate with multiple service providers with one and the same remote service identifier and object type.

### code example 6 in JavaScript:

```
      var message = new RI.Message(sServiceTagEmail);
         message.addServiceData('email', 'foo@bar.com');
         message.sTopic = 'Foo message';
         message.sBody = 'Foo message body';
         message.create(oUserIdentity, evaluatingResults);
```

### code example 7 in C++:

```
      RIMessage message = new RI.Message (sServiceTagEmail);
         message->addServiceData("email", "foo@bar.com");
         message->setTopic("Foo Message");
         message->setBody("Foo message body");
         message->create(oUserIdentity, &evaluatingResults);
```

The code example 6 relates to sending a message wherein the message is of type e-mail. The corresponding method call in the application is a create method as illustrated by code example 8:

```
      Method: create
      Node includes:
         ObjectType (specific object structure with, for example, topic,
      body, attachments)
      inherited NodeIdentifier data:
         ObjectType: message
         ServiceTag: email
         ServiceData includes: e-mail address of recipient
```

The service provider (i.e., the remote device) depends on the node identifier and the service data. One remote service identifier (ServiceTag) may relate to multiple service providers.

The following call parameter example relates to two options A and B for sending a message wherein the message is an Instant Message. The method call in the application is a create method:

option A:

```
      Method: create
      Node includes:
         ObjectType specific Object Structure
      inherited NodeIdentifier data:
         ObjectType: message
         ServiceTag: icq
         ServiceData includes: icq-ID/UserID of recipient
```

### option B:

```
      Method: create
      Node includes:
         ObjectType spez. Object Structur
      inherited NodeIdentifier data:
         ObjectType: message
         ServiceTag: facebook_im
         ServiceData includes: user id of recipient
```

In the parameter call example (options A and B) the service provider (remote device) depends on the ServiceTag. There is one service provider per remote service (ServiceTag).

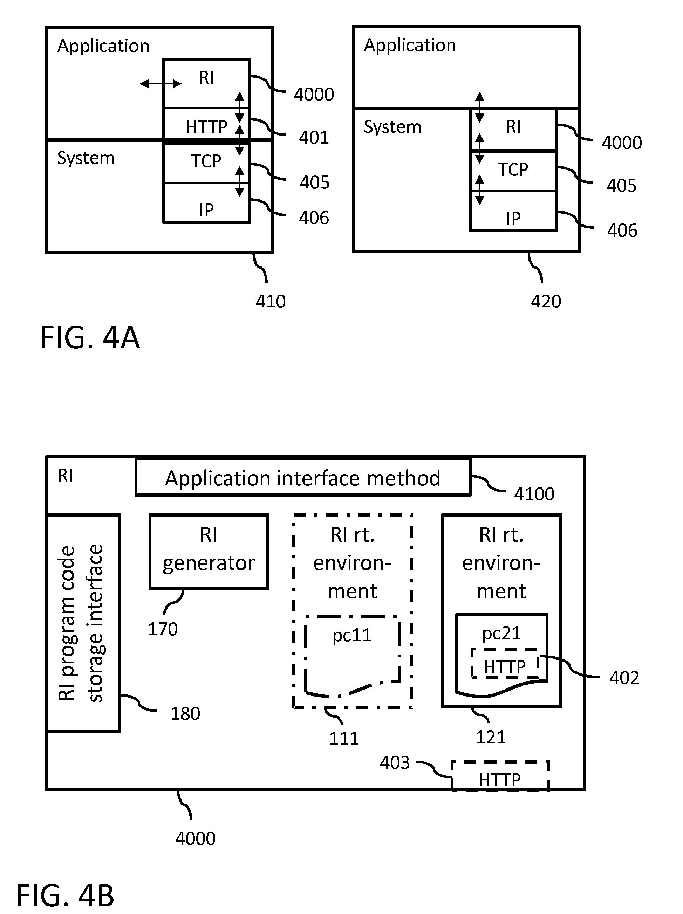

FIG. 4A shows two alternative embodiments 410, 420 for nesting an RI runtime environment. In the first embodiment 410, the remote interface 4000 is nested in the application (cf. FIG. 2) and an HTTP client interface 401 is integrated in the application running on the client. That is, the remote interface RI 4000 can make use of the HTTP client interface 401 to communicate with the TCP/IP interface 405/406 of the operating system of the client. If the RI program code of any RI runtime environment requires an HTTP client interface it can make use of the integrated HTTP client interface 401.

In the second embodiment 420, the remote interface RI 4000 is nested in the operating system of the client (cf., FIG. 1). In this embodiment, the RI 4000 communicates with the application and the TCP/IP interface 405/406. Neither the application nor the operating system of the client provides an HTTP client interface to the remote interface 4000. In this case, the remote interface RI 4000 may include the HTTP client interface or the respective RI program code may include instructions to generate the HTTP client interface at runtime. Those two options are illustrated in FIG. 4B showing an example of a packaged RI according to an embodiment of the invention. The remote interface 4000 includes the RI program code storage interface 180 to retrieve the RI program codes for generating respective RI runtime environments. Further, it includes the RI generator component 170 as well as the already existing or generated RI runtime environments 111, 121 with their respective RI program codes pc11, pc21. The RI 4000 further has at least one application interface method 4100 which is called by the method call 162 (cf. FIGs. 1, 2). For example, in code example 6, the method call message.create(oUserIdentity, evaluatingResults) calls the application interface method 4100 to initiate the computer implemented method as disclosed in FIG. 3. The application interface method may be included in a library for a respective programming language. The library may be available to the application as a compiled or source code library. In one embodiment, the remote interface RI 4000 can include the HTTP client interface 403. In an alternative embodiment, the HTTP client interface 402 is part of the RI program code pc21 and can be instantiated at runtime by executing the program code pc21 in case that no external HTTP client interface is available.

FIG. 5 is an example UML class diagram 500 used in one embodiment of the invention. The class diagram 500 includes relevant objects for a particular remote service example. Each object has an object name and a list of members (variables and functions) according to the UML standard. Nodeldentifier 501 is an example object structure (superclass) of a node identifier in the context of this disclosure. Node 502 inherits all members of Nodeldentifier 501 and describes some more basic members which can be relevant for all subordinate objects. The objects Identity 503, Clientldentity 505 and Userldentitiy 504 may serve the identification and authentication of users. UseAccount Info 506 is an object type which may serve the retrieval of basic user account information. FileStorage 507 is an object type to get information about file storage attributes. File 508 is an object type including relevant information/data about/of a file.

When executing a particular RI program code the client computer may also track statistical information regarding the use of the corresponding RI runtime environment and/or regarding the use of the corresponding remote service. Such statistics can be used, for example, to track remote service consumption for the user of the client computer and enables service consumption based charging.

To protect the RI program code from tampering through third-party members the RI program code storage interface can use digital signatures. For example, each RI program code in the RI program code storage may have its own digital signature. These digital signatures can verify a signer based on a signer certificate. Each signer certificate can be verified by a CA (certificate authority) using the CA certificate. This allows the RI program code storage interface (cf., FIG. 1: interface component 180) to verify the RI program code during or after loading the RI program code on the local computer. Verification of the RI program code can be based on a digital signature method, such as for example, the RSA EMSA-PKCS1-v1_5 method.

The RI program code includes instructions which allow communicating with the calling application and with the corresponding remote service. For the communication with the remote service the RI runtime environment can make use of the communication interfaces 190 (cf,, FIGs 1, 2) provided by the client computer (e.g., HTTP(s), TCP, IP).

At runtime, the RI program code which is executed in response to the method call of the application uses the node identifier specified by the method call to identify which node-object(s) of the respective remote service is/are to be addressed. In case of an imprecise specification of an object (node) the RI program code can generate a response including all objects (nodes) or a specific main object (node) of the respective remote service which are available for the remote service identifier and the specified RI parameters.

An example of a FileStorage service provider is Dropbox Inc. operating the service DROPBOX. At the moment DROPBOX supports one FileStorage (cf. FIG. 5, FileStorage 507) per user. Therefore, the respective RI program code example addresses only one FileStorage per user. Addressing different FileStorage objects in DROPBOX is not necessary and not possible with the example RI program code. The RI program code returns the result of the request and the respective status information regarding the current status of the request to the application in an InterfaceResponse object. This is achieved through a respective function call with the specified RI parameters by using the respective RI runtime environment. The InterfaceResponse object is available for the application developer of the application in format that depends on the programming language used for the application. For example, dependent on the programming language, the InterfaceResponse object can be available as a class, structure, abstract data type, or as a string with the InterfaceResponse object as a JSON object.

For example, RI program code can be JavaScript code (e.g., ECMAScript variant). The following JavaScript code example 9 illustrates an example source code (not compressed and without signature) for the RI program code for the service "DROPBOX", the object type "FILE_STORAGE" and the method "READ".

Code example 9:

```
 /**************************************************************************
 **
 * Service: Dropbox(TM)
 * ObjectType: FileStorage
 * Methode: Read
 ***************************************************************************
 */
      var serv = new RI.createService(DROPBOX_SERVICE_TAG);
      serv.createObjectTypeInterface(RI.ObjectType.FILE_STORAGE)
      .createInterfaceFunction(RI.InterfaceFunction.READ,
         function(what, who, callback)
      {
         var what_data_selection = what._data_selection,
           what_data_match = what._data_match;
         if(what_data_match && (
           typeof what_data_match == "object" &&
           what_data_match instanceof Array &&
           what_data_match.length > 0))
         {
           throw new Error(
               "Service: '" +
              DROPBOX_SERVICE_TAG +
               "' not supports data match on read " +
               RI.ObjectType.USER_ACCOUNT_INFO);
         }
         var i = 0,
            m = who.length,
            pri_user_ident = null;
         for(; i < m; ++i) {
            if(who[i] instanceof RI.UserIdentity &&
              who[i]._identifier_service_tag == DROPBOX_SERVICE_TAG)
            {
               pri_user_ident = who[i];
               break;
            }
         }
         if(pri_user_ident == null) {
            callback(new RI.InterfaceResponse(401));
            return;
         }
         var identifier_service_data =
      pri_user_ident._identifier_service_data;
         var httpclient = new HttpClient();
         httpclient.openUrl(HTTP_METHOD_GET, DB_API_URL_ACCOUNT_INFO);
         httpclient.request.headers.add(HttpHeaders.AUTHORIZATION, "Bearer "
      +
            identifier_service_data.access_token);
         httpclient.onDone = function(hc) {
            if(hc.status == 200) {
              var freader = new FileReader();
              freader.onload = function(e) {
                      var fs = null;
                      try {
                             var ret = JSON.parse(freader.result);
                             if(ret == null || ret == "") { throw new
      Error("server return is null"); }
                             if(ret["error"]) { throw new Error("result is
      error"); }
                             var quota = ret["quota_info"];
                             fs = new FileStorage(DROPBOX_SERVICE_TAG, {uid:
      ret["uid"], path: ""});
                             fs.lTotalSpace = Number.parseInt(quota["quota"]);
                             fs.lUsageSpace = Number.parseInt(quota["normal"]);
                             fs.lUsageSpace += Number.parseInt(quota["shared"]);
                      } catch (e) {
                             fs = null;
                      }
                      if(fs) {
                             callback(new RI.InterfaceResponse(200, fs));
                      } else {
                             callback(new RI.InterfaceResponse(500));
                      }
               };
               freader.readAsText(hc.response.getDataBlob());
            } else {
               callback(new RI.InterfaceResponse(400));
            }
         };
         httpclient.send();
      });
```

In the above JavaScript example, the JavaScript function "function(what, who, callback) " can be called indirectly by code examples 1 and 2 (RI.read method call with the parameters: new RI.FileStorage(sServiceTag), oUserIdentity, evaluatingResults). All objects (nodes) with ObjectType: FILE_STORAGE of the user with the identity oUserIdentity are retrieved through the remote service with the service identifier DROPBOX_SERVICE_TAG.

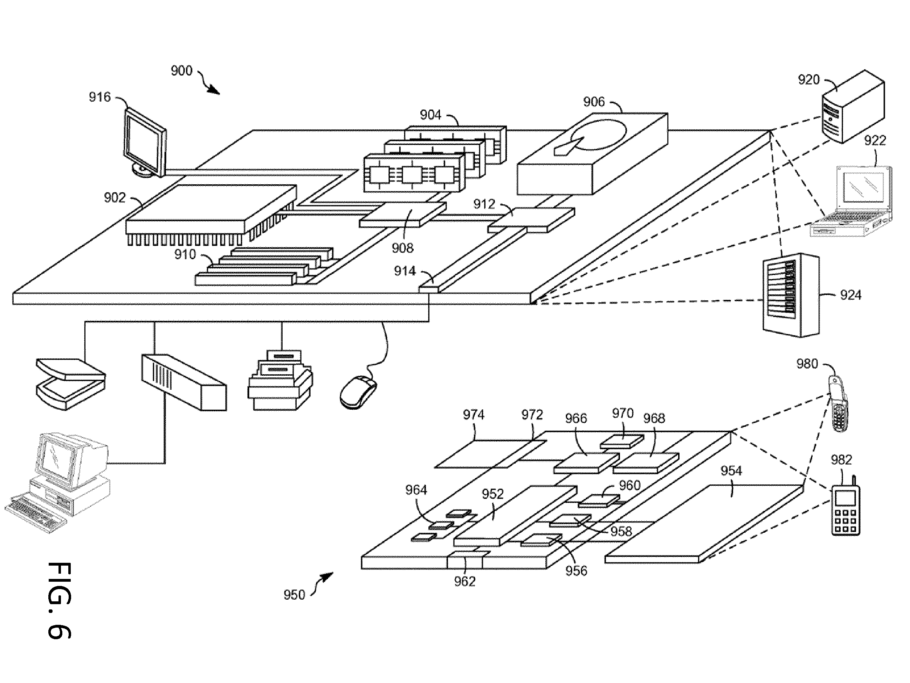

FIG. 6 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Computing device 950 is intended to represent various forms of mobile devices, such as personal digital assistants, cellular telephones, smart phones, and other similar computing devices. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for cooRInation of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. A local computer (100) for using an arbitrary remote service (11, 21, n1) via a respective remote interface also referred to as RI, the local computer comprising:
an interface component (180) configured to access an RI program code storage;
a runtime environment (160) configured to execute an application (161) using one or more processors of the local computer and an application memory portion of a memory of the local computer, the application including a method call (162) which is to be associated with a particular remote service (11), the method call (162) using RI parameters including at least a remote service identifier specifying the particular remote service, an associated object type, and an associated method identifier;
an RI generator component (170) configured to check if a particular RI runtime environment (121, 1n1) associated with the particular remote service (11) is available on the local computer (100), and further configured to load from the RI program code storage a particular RI program code (pc11) associated with the RI parameters, and to generate the particular RI runtime environment (111) if the particular RI runtime environment (111) is not available; and
the particular RI runtime environment (111, 121, 1n1) configured to execute the particular RI program code (pc11, pc21, pcn1) for establishing a communication between the application (161) and the particular remote service (11, 21, n1).

2. The local computer (100) of claim 1, wherein the particular RI runtime environment (111, 121, 1n1) further comprises a converter component configured to convert data between remote data formats used by the remote service and respective application data formats used by the application.

3. The local computer (100) of claim 2, wherein the converter component is further configured to insert an interface layer which is required by the particular remote service (11, 21, n1) if the required interface is not provided by the application runtime environment (160).

4. The local computer (100) of claim 2, wherein the converter component is further configured to insert an interface layer which is required by the particular remote service (11) if the required interface is not provided by the operating system of the local computer (100).

5. The local computer (100) of any one of the previous claims, wherein the particular RI runtime environment (111, 121, 1n1) uses an RI memory portion of the memory of the local computer which is isolated from the application memory portion used by the application (161).

6. The local computer (100) of any one of the previous claims, wherein the particular RI program code (pc11, pc21, pcn1) includes code instructions in a different programming language than the programming language of the application program code.

7. The local computer (100) of any one of the previous claims, wherein the application program code is configured to implement the complete remote interface of the particular remote service.

8. The local computer (100) of any one of the previous claims, wherein the particular RI program code (pc11, pc21, pcn1) has a particular digital signature configured to verify a signer of the particular RI program code (pc11, pc21, pcn1) based on a signer certificate, and wherein the interface component (180) is further configured to verify the particular RI program code by verifying the signer certificate using a certificate authority certificate.

9. A computer implemented method (1000) for dynamic generation of a remote interface, also referred to as RI, for using an arbitrary remote service (11, 21, n1) on a local computer (100), the method comprising:
processing (1100) a method call (162) while executing an application (161) in a runtime environment (160) of the local computer (100) wherein the method (162) call is to be associated with a remote service (11, 21, n1), the method call (162) using RI parameters including at least a remote service identifier specifying the remote service, an associated object type, and an associated method identifier;
checking (1200) on the local computer (100) if a particular RI runtime environment (121, 1n1) associated with the particular remote service (11) is available on the local computer (100);
if the particular RI runtime environment (111) is not available, loading (1300) from the RI program code storage a particular RI program code (pc11) associated with the RI parameters, and generating (1400) the particular RI runtime environment (111);
executing (1500) the particular RI program code (pc11, pc21, pcn1) with the respective particular RI runtime environment (111, 121, 1n1) for establishing a communication between the application (161) and the particular remote service (11, 21, n1).

10. The computer implemented method of claim 9, further comprising:
if the particular RI runtime environment (111) is available, checking (1250) if the corresponding RI program code is up-to-date; and
if the corresponding RI program code (pc11) is not up-to-date, loading (1300) from the RI program code storage the particular up-to-date RI program code associated with the RI parameters, and updating (1450) the particular RI runtime environment (111).

11. The computer implemented method of claim 9 or 10, further comprising:
if executing (1500) results in an execution error, checking if the corresponding RI program code is up-to-date; and
if the corresponding RI program code is not up-to-date, loading (1300) from the RI program code storage (180) the particular RI program code (pc11) associated with the RI parameters, and updating (1450) the particular RI runtime environment (111).

12. The computer implemented method of claim of any one of the claims 8 to 10, wherein the particular RI program code (pc11, pc21, pcn1) has a particular digital signature configured to verify a signer of the particular RI program code (pc11, pc21, pcn1) based on a signer certificate, further comprising:
verifying the particular RI program code by verifying the signer certificate using a certificate authority certificate.

13. A computer program product comprising instructions that when loaded into a memory of a local computing device and executed by at least one processor of the local computing device execute the method steps of the computer implemented method according to any one of the claims 8 to 12.
